# EUROPEAN PATENT SPECIFICATION

(11) **EP 1 619 058 B1**
(45) Date of publication and mention of the grant of the patent: **26.03.2008**
(21) Application number: 04103544.5
(22) Date of filing: 23.07.2004
(51) Int. Cl.: B60J 7/00

(54) **Roof assembly for a vehicle**
Dachanordnung für ein Fahrzeug
Ensemble de toit pour véhicule

(43) Date of publication of application: 25.01.2006
(73) Proprietor: Inalfa Roof Systems Group B.V., 5804 AH Venray (NL)
(72) Inventor: van Haren, Jorn, 5501 DL Veldhoven (NL)
(74) Representative: Metman, Karel Johannes

(56) References cited:
- EP-A- 0 899 138
- US-A- 5 558 394

## Description

The present invention relates to a roof assembly for a vehicle according to the preamble of claim 1.

These roof assemblies are often provided with a sunshade retrieval system in order to move a sunshade which is completely hidden above the headliner to a position in which the grip of the sunshade is accessible again. This retrieval system is often controlled by the movement of the closure means. This is for example the case in DE 29 23 904 C3, in which the closure panel of the vehicle roof system has means to take along the sunshade when the closure panel is moved to its open position between the headliner and the fixed roof. In order to make the sunshade accessible again, a moveable water gutter follows the sliding movements of the closure panel and takes along the sunshade when the closure panel is moved from its open position and has nearly reached its closed position.

When such system is combined with an anti-trap detection system, there is a risk that the sunshade control unit erroneously detects an "object pinch condition" when the sunshade is moved due to the additional force needed to take along the sunshade in the last part of the closing movement of the closure panel. The closure panel then retracts to an open position again, which may confuse the vehicle driver. The anti-trap detection system is only active in the last part of the closing movement of the closure panel.

Other sunshade retrieval systems have been developed, see for example US-A-4,650,244 and EP-A-0 899 138. However, these systems are not completely satisfactory as well.

It is an object of the present invention to provide a new vehicle roof assembly having a sunshade retrieval system.

For this purpose, the roof assembly according to the invention has the features of the characterizing portion of claim 1.

The moveable stop according to the invention has two functions. First of all, it prevents the sunshade to be moved too far behind the headliner when the closure means is not in its completely open position. It is thereby prevented that the grip of the sunshade becomes inaccessible above the headliner such that the sunshade can not be retrieved anymore by hand. By taking along the stop when the closure means is moved to its completely open position, the sunshade may be moved to its completely open position. When the closure means is moved back to its closed position, the stop will preferably be brought back to its original starting position. This can be done through a spring mechanism, but according to the invention it is preferred that the operating mechanism and the stop are provided with a detachable coupling. In that case the stop will move along with the operating mechanism in two directions as long as the coupling is active.

Preferably, the stop is provided with a locking member in order to lock the stop with respect to stationary part, in particular the guide rail. In this embodiment, the stop will be locked to the stationary part by the locking member as long as it is not coupled to the closure means. It can then act as a stationary stop for the sunshade in a reliable manner.

In a favourable embodiment the coupling and the locking member are associated such that engagement of the coupling leads to automatic disengagement of the locking member from the stationary part, and wherein preferably the locking member assists in keeping the coupling between the operating mechanism and the stop engaged.

In this embodiment, the coupling and locking member are combined and co-operate such that one assists the other in its activation and/or deactivation.

Further details and advantages of the invention follow from the description of the figures showing an embodiment of the roof assembly for a vehicle according to the invention.

Fig. 1 is a very schematic longitudinal section of a vehicle roof with closure panel and sunshade in different positions.

Fig. 2 is an enlarged perspective view of one half of a sunshade and one guide rail of an embodiment of the vehicle roof system according to the invention.

Figs. 3-5 show detail III in Fig. 2 on an enlarged scale and in four different positions.

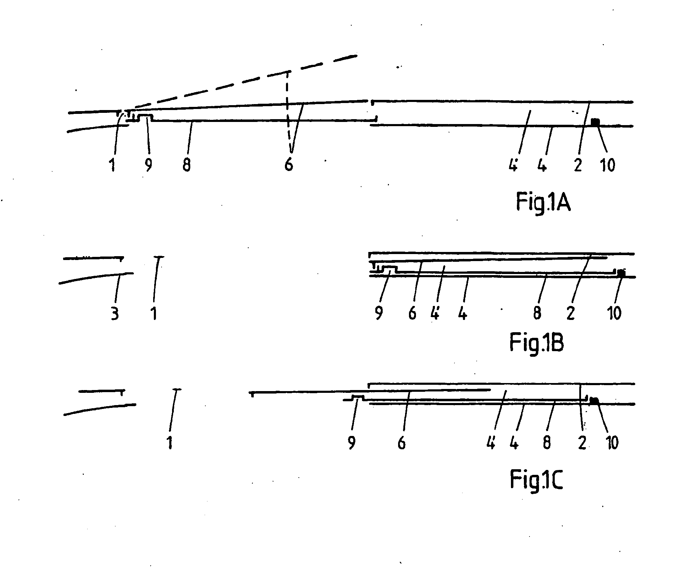

The drawings and in first instance Figs. 1A-1C show a roof assembly for a vehicle having an opening 1 in its fixed roof 2. The vehicle is preferably a motor vehicle such as a passenger car. The roof assembly comprises a stationary part, which may be in the form of a frame to be fixed to the vehicle roof 2. A headliner 4 is fixed to or forms part of the frame 3 and together with the fixed roof 2 it forms a space 4'.

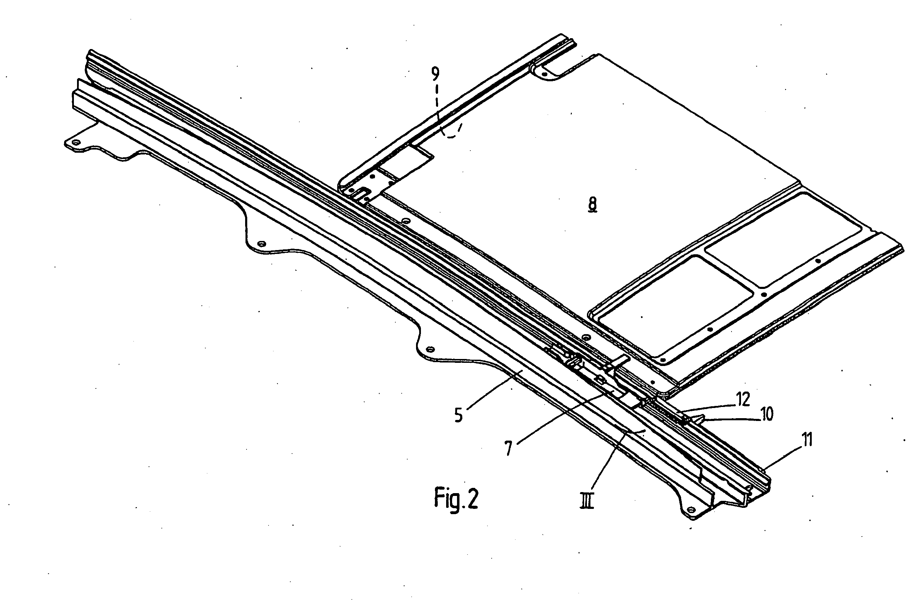

The frame 3 comprises or supports at least one guide rail 5 (see Figs. 2-5) extending in the longitudinal direction of the roof assembly, partly alongside the roof opening 1 and partly rearwardly thereof below the fixed roof and above the headliner 4.

The roof assembly further comprises an adjustable closure means, here in the form of a rigid, preferably transparent or semi-transparent panel 6 of glass, plastic or metal. The panel 6 is supported by the frame 3 through an operating mechanism 7 (a rear part is shown in Fig. 2) which is well-known in the art and is not shown here as it does not form part of the invention. By means of the operating mechanism 7, the closure panel 6 is adjustable at least between a closed position in which it closes the roof opening 1 and an open position in which it is moved at least partly between the fixed roof 2 and the headliner 4. In the embodiment shown, the panel 6 is also moveable between the closed position and an upwardly pivoted venting position.

A sunshade 8 is slidably guided by the guide rails 5 in positions below the roof opening 1 and in the space 4' between the fixed roof 2 and the headliner 4. The sunshade 8 is intended to keep out the sun when the panel 6 is in its closed position or in the venting position and may be manually slidable in forward and rearward directions through a grip 9 provided near the front edge of the sunshade 8, preferably on the lower side thereof.

According to the invention, there is provided a moveable stop 10 for the sunshade which in this case is provided on the guide rail 5. This stop 10 has an activated position (Fig. 1A, 1C) in which it is positioned in the traveling path of the sunshade 8, such that it restricts the rearward movement of the sunshade 8. When the stop 10 is in its active position, the sunshade has a maximally opened position (Fig. 1C) in which its grip 9 still lies in front of the headliner 4 so that it is accessible by hand. The moveable stop 10 can be moved rearwardly, preferably by means of the movement of the panel 6, such that it is moved out of the way (Fig. 1B), especially when the panel 6 is in its fully opened position so that in this fully open position the panel 6, the sunshade 8 is or may be also moved to a fully open position in which the grip 9 is hidden behind the headliner 4 (See Fig. 1B).

The moveable stop 10 may be moved back to its active position, thereby taking along the sunshade 8 to an intermediate position in which the grip 9 is accessible by hand again (Fig. 1C). The forward movement of the stop 10 and the sunshade 8 is effected by means of the operating mechanism 7 of the panel 6. This is done in the rearward part of the traveling path of the panel 6 in which the anti-trap mechanism is inactive. Thus, the forces which may be encountered in the operating mechanism 7 do not influence the anti-trap mechanism thereby preventing failures as a result thereof.

Figs. 2-5 show the moveable stop 10 in more detail. Fig. 2 shows a sunshade and the guide rail 5 slidably guiding the sunshade through an inner groove 11 in which slide shoes on a corresponding side of the sunshade 8 may engage (not shown). In this groove 11 or in another position in the path of travel of the sunshade 8 there is provided the moveable stop 10. This moveable stop 10 is provided on a slide 12 engaging around parts of the guide rail 5 such that the stop 10 may only slide and not make any other movements.

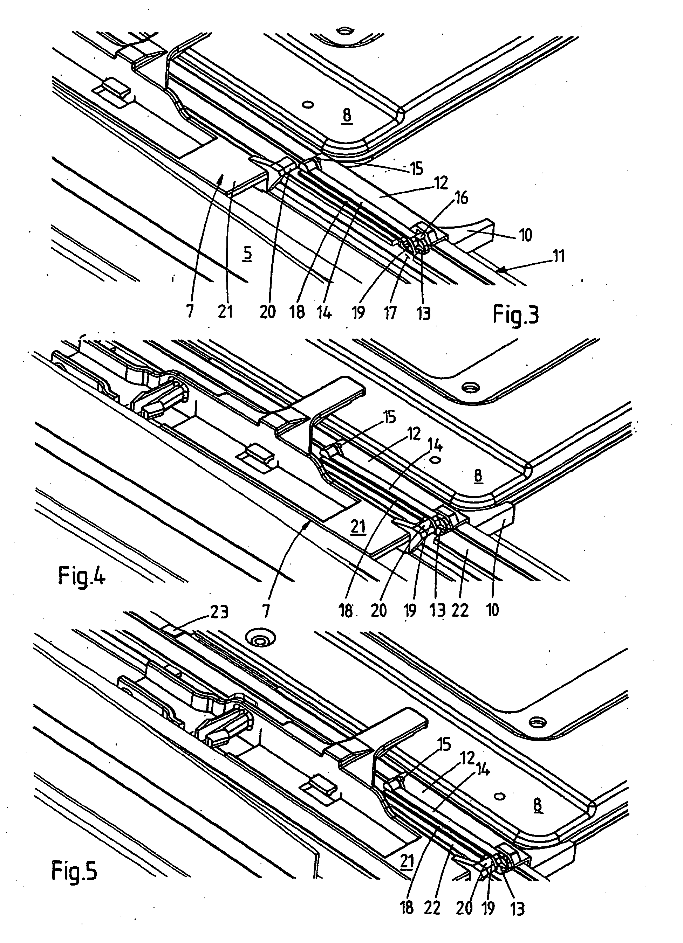

As shown in Figs. 3-5, the slide 12 is provided with a locking member, here in the form of a cam 13 provided at the rear end of an arm 14 which is pivotable around a horizontal transverse axis 15 which is positioned near the front side of the slide 12. A stroke limiter 16 provided near the cam 13 limits the upward movement of the arm 14. The cam 13 is adapted to engage into a locking recess 17 provided in the upper side of the guide rail 5, in the path of travel of the cam 13. A spring or the like (not shown) may be used to bias the arm 14 downwardly and keep the cam 13 in engagement with the locking recess 17. The arm 14 is provided with a slot 18 which is open at the front end. In the active position of the stop 10 in which the cam 13 is engaged in the locking recess 17, the slot 18 in the arm 14 extends parallel to the guide rail 5. At the free rear end of the arm 14, the slot 18 comprises an unlocking portion 19 extending downwardly and rearwardly from the main portion of the slot 18.

The slot 18 is intended to co-operate with an operating cam 20 which is provided on a slide 21 of the operating mechanism 7 which slides along with the panel 6. The operating cam 20 is positioned such that it comes into engagement with the slot 18 in the arm 14 when a panel is moved rearwardly and the sunshade 8 approaches the stop 10 (Fig. 3). Just before the sunshade 8 comes into engagement with the moveable stop 10, the operating cam 20 comes into engagement with the unlocking portion 19 of the slot 18 and due to the downward extent of the unlocking portion 19, the locking cam 13 will be lifted and the arm 14 will be pivoted upwardly when the operating cam 20 moves through the unlocking portion 19 of the slot 18. When the operating cam 20 arrives at the rear end of the unlocking portion 19 (see Fig. 4) the locking cam 13 will be lifted out of the locking recess 17 and therefore the slide 12 and the moveable stop 10 has been unlocked with respect to the stationary guide rail 5. Upon further rearward movement of the sunshade 8 and the operating cam 20, the moveable stop 10 will be taken along in rearward direction (Fig. 5). During this movement, the cam 13 is prevented from moving downwardly again due to the underlying flange 22 of the guide rail 5 and as a result, the operating cam 20 is locked in the unlocking portion 19 of the slot 18. As a consequence, the slide 12 and the moveable stop 10 have to follow all movements of the operating mechanism 7 as long as the cam 13 is out of vertical alignment with the locking recess 17.

When the closure panel 6 is moved again towards the closed position, the moveable stop 10 - which is coupled to the operating mechanism 7 - will urge the sunshade 8 forwardly and will make the grip 9 thereof accessible again. When the moveable stop 10 arrives in its active position in which the locking cam 13 is vertically aligned with the locking recess 17, the slide 12 will be stopped by a member such as protrusion 23 (Fig. 5) and upon a further forward movement of the operating cam 20 it will urge the cam 13 downwardly due to its movement with respect to the unlocking portion 19. After the cam 13 is in engagement with the locking recess 17, the operating cam 20 is allowed to enter the main portion to the slot 18 and is then allowed to move through the slot 18 and out of it through the open front end thereof. Now, the moveable stop 10 is locked in its active position and does not follow the closure panel 6 anymore so that the sunshade 8 will remain stationary as well. From here, the grip 9 of the sunshade 8 may be grasped again and moved forward to its closed position in a manual way.

From the foregoing it will be apparent that the invention provides a roof assembly for a vehicle which is remarkable for the easy and comfortable operation of the sunshade.

The invention is not restricted to the above-described embodiment as shown in the drawing, which can be varied in several ways without departing from the scope of the invention.

## Claims

1. A roof assembly for a vehicle having an opening (1) in its fixed roof (2), comprising a stationary part (3) to be fixed to the roof, which includes at least one guide rail (5) extending in the longitudinal direction of the roof assembly, partly alongside the roof opening and partly rearwardly thereof below the fixed roof, an adjustable closure means (6) supported by said stationary part, said closure means being adjustable at least between a closed position, in which it closes the roof opening, and an open position, in which it is moved at least partly between the fixed roof and a headliner (4), the closure means being movably supported by an operating mechanism (7) guided by the guide rail, and a sunshade (8) slidably guided by said guide rail in positions below the roof opening and above the headliner, said sunshade having a grip (9) near its front edge and being slidable by hand between a position below the roof opening and a position above the headliner, **characterized in that** the guide rail (5) is provided with a movable stop (10) to limit the backward movement of the sunshade (8), the operating mechanism (7) of the closure means (6) being adapted to come into engagement with the movable stop in order to take it along at least during a part of its traveling path.

2. A roof assembly according to claim 1, wherein the operating mechanism (7) comes into engagement with the stop (10) only in a rearward portion of its traveling path.

3. A roof assembly according to claim 1 or 2, wherein the operating mechanism (7) and the stop (10) are provided with a detachable coupling (18-20):

4. A roof assembly according to claim 3, wherein the stop (10) is provided with a locking member (13, 14) in order to lock the stop with respect to the stationary part (3), in particular the guide rail (5).

5. A roof assembly according to claim 4, wherein the coupling and the locking member (13, 14) are associated such that engagement of the coupling (18-20) leads to automatic disengagement of the locking member (13, 14) from the stationary part, and wherein preferably the locking member (13,14) assists in keeping the coupling between the operating mechanism (7) and the stop (10) engaged.

6. A roof assembly according to claim 5, wherein the locking member (13, 14) is movably connected to the stop (10) such that it can move at an angle to the guide rail (5) and can enter and leave a locking recess (17) in the guide rail, the coupling (18-20) including a cam-curve arrangement, such that when the cam (20) and curve (18, 19) are in engagement, at least a part of the relative movement of the cam (20) and the curve (19) causes the movement of the locking member (13, 14).

7. A roof assembly according to claim 6, wherein stop (10) is provided with the curve (18, 19) and the locking member (13, 14) is connected to the curve which is movable together with the locking member (13, 14).

8. A roof assembly according to claim 6, wherein the stop (10) is provided on a slide (12) which is slidably guided by the guide rail (5), the curve (18, 19) being provided in a pivotable arm (14), which comprises a locking cam (13) to provide the locking member co-operating with a locking recess (17) in the guide rail (5).

## Patentansprüche

1. Dachanordnung für ein Fahrzeug mit einer Öffnung (1) in seinem Festdach (2), aufweisend einen an dem Dach anzubringenden stationären Teil (3), der mindestens eine Führungsschiene (5) aufweist, die sich in Längsrichtung der Dach-Anordnung teilweise neben der Dachöffnung und teilweise rückwärts davon unter dem Festdach erstreckt, ein verstellbares Verschlussmittel (6), das von dem stationären Teil abgestützt wird, wobei das Verschlussmittel wenigstens zwischen einer Schließposition, in der es die Dachöffnung schließt, und einer Offenposition verstellbar ist, in der es wenigstens teilweise zwischen das Festdach und einen Dachhimmel (4) bewegt ist, wobei das Verschlussmittel von einem Betätigungsmechanismus (7) bewegbar abgestützt ist, der von der Führungsschiene geführt wird, und eine Sonnenblende (8), die von der Führungsschiene in Positionen unter der Dachöffnung und über dem Dachhimmel verschiebbar geführt ist, wobei die Sonnenblende nahe ihres Frontrandes einen Griff (9) aufweist und von Hand zwischen einer Position unter der Dachöffnung und einer Position über dem Dachhimmel verschiebbar ist, **dadurch gekennzeichnet, dass** die Führungsschiene (5) mit einer bewegbaren Stoppvorrichtung (10) zum Begrenzen der Rückwärtsbewegung der Sonnenblende (8) versehen ist, wobei der Betätigungsmechanismus (7) des Verschlussmittels (6) zum In-Eingriff-Bringen mit der bewegbaren Stoppvorrichtung angepasst ist, so dass sie wenigstens über einen Abschnitt seines Reiseweges mitgenommen wird.

2. Dachanordnung gemäß Anspruch 1, wobei der Betätigungsmechanismus (7) nur in einem Rückwärtsabschnitt seines Reiseweges in Eingriff mit der Stoppvorrichtung (10) kommt.

3. Dachanordnung gemäß Anspruch 1 oder 2, wobei der Betätigungsmechanismus (7) und die Stoppvorrichtung (10) mit einer abtrennbaren Kupplungsvorrichtung (18-20) versehen sind.

4. Dachanordnung gemäß Anspruch 3, wobei die Stoppvorrichtung (10) mit einem Verrieglungselement (13, 14) zum Verriegeln der Stoppvorrichtung bezüglich des stationären Teils (3), insbesondere der Führungsschiene (5), versehen ist.

5. Dachanordnung gemäß Anspruch 4, wobei die Kupplungsvorrichtung und das Verrieglungselement (13, 14) einander zugeordnet sind, so dass das In-Eingriff-Bringen der Kupplungsvorrichtung (18-20) zu einem automatischen Außer-Eingriff-Bringen des Verriegelungselements (13, 14) aus dem stationären Teil führt und wobei vorzugsweise das Verriegelungselement (13, 14) beim In-Eingriff-Halten der Kupplungsvorrichtung zwischen dem Betätigungsmechanismus (7) und der Stoppvorrichtung (10) hilft.

6. Dachanordnung gemäß Anspruch 5, wobei das Verriegelungselement (13, 14) mit der Stoppvorrichtung (10) beweglich verbunden ist, so dass es in einem Winkel zu der Führungsschiene (5) bewegbar ist und in eine Verriegelungsausnehmung (17) in der Führungsschiene einmünden oder dieselbe verlassen kann, wobei die Kupplungsvorrichtung (18-20) eine Nocken-Rundungs-Vorrichtung aufweist, so dass, wenn der Nocken (20) und die Rundung (18, 19) in Eingriff stehen, wenigstens ein Teil der Relativbewegung des Nockens (20) und der Rundung (19) die Bewegung des Verriegelungselements (13, 14) bewirkt.

7. Dachanordnung gemäß Anspruch 6, wobei die Stoppvorrichtung (10) mit der Rundung (18, 19) versehen ist und das Verriegelungselement (13, 14) an der Rundung angeschlossen ist, die gemeinsam mit dem Verriegelungselement (13, 14) bewegbar ist.

8. Dachanordnung gemäß Anspruch 6, wobei die Stoppvorrichtung (10) an einem Läufer (12) vorgesehen ist, der von der Führungsschiene (5) verschiebbar geführt ist, wobei die Rundung (18, 19) in einem schwenkbaren Arm (14) vorgesehen ist, der einen Verriegelungsnocken (13) zum Bereitstellen des mit einer Verriegelungsausnehmung (17) in der Führungsschiene (5) zusammenwirkenden Verriegelungselements aufweist.

## Revendications

1. Ensemble de toit pour un véhicule comportant une ouverture (1) dans son toit fixe (2), comprenant une partie stationnaire (3) à fixer sur le toit, qui comprend au moins un rail de guidage (5) s'étendant dans la direction longitudinale de l'ensemble de toit, partiellement le long de l'ouverture de toit et partiellement à l'arrière de celle-ci au-dessous du toit fixe, des moyens de fermeture réglables (6) supportés par ladite partie stationnaire, lesdits moyens de fermeture étant ajustables au moins entre une position fermée, dans laquelle ils ferment l'ouverture de toit, et une position ouverte dans laquelle ils sont déplacés au moins partiellement entre le toit fixe et une garniture (4) de toit, les moyens de fermeture étant supportés de façon mobile par un mécanisme d'actionnement (7) guidé par le rail de guidage, et un pare-soleil (8) guidé de façon coulissante par ledit rail de guidage dans des positions au-dessous de l'ouverture de toit et au-dessus de la garniture, ledit guide pare-soleil ayant une prise (9) à proximité de son bord avant et pouvant coulisser à la main entre une position au-dessous de l'ouverture de toit et une position au-dessus de la moulure, **caractérisé en ce que** le rail de guidage (5) est muni d'une butée mobile (10) pour limiter le mouvement arrière du pare-soleil (8), le mécanisme d'actionnement (7) des moyens de fermeture (6) étant apte à venir en prise avec la butée mobile pour l'emmener au moins sur une partie de sa course de déplacement.

2. Ensemble de toit selon la revendication 1, dans lequel le mécanisme d'actionnement (7) vient en prise avec la butée (10) uniquement dans une portion vers l'arrière de sa course de déplacement.

3. Ensemble de toit selon la revendication 1 ou la revendication 2, dans lequel le mécanisme d'actionnement (7) et la butée (10) sont munis d'un dispositif d'accouplement (18-20) amovible.

4. Ensemble de toit selon la revendication 3, dans lequel la butée (10) est munie d'un élément de verrouillage (13, 14) pour bloquer la butée par rapport à la partie stationnaire (3), en particulier le rail de guidage (5).

5. Ensemble de toit selon la revendication 4, dans lequel le dispositif d'accouplement et l'élément de blocage (13, 14) sont associés de telle sorte que la mise en prise du dispositif d'accouplement (18-20) entraîne la libération automatique de l'élément de verrouillage (13, 14) de la partie stationnaire, et dans lequel, de préférence, l'élément de verrouillage (13, 14) aide à maintenir en prise l'accouplement entre le mécanisme opérant (7) et la butée (10).

6. Ensemble de toit selon la revendication 5, dans lequel l'élément de verrouillage (13, 14) est raccordé de façon mobile à la butée (10), de telle sorte qu'il peut se déplacer selon un certain angle par rapport au rail de guidage (5) et peut pénétrer dans et quitter un évidement de blocage (17) dans le rail de guidage, le dispositif d'accouplement (18-20) comprenant un agencement came-courbe, de telle sorte que lorsque la came (20) et la courbe (18, 19) sont en prise, au moins une partie du mouvement relatif de la came (20) et de la courbe (19) entraîne le déplacement de l'élément de verrouillage (13, 14).

7. Ensemble de toit selon la revendication 6, dans lequel la butée (10) est munie de la courbe (18, 19) et l'élément de verrouillage (13, 14) est raccordé à la courbe qui est mobile conjointement avec l'élément de verrouillage (13, 14).

8. Ensemble de toit selon la revendication 6, dans lequel la butée (10) est munie d'une glissière (12) qui est guidée de façon coulissante par le rail de guidage (5), la courbe (18, 19) étant disposée dans un bras pivotant (14) qui comprend une came de blocage (13) pour assurer la coopération de l'élément de verrouillage avec un évidement de verrouillage (17) dans le rail de guidage (5).
